# FASCICULE DE BREVET EUROPEEN

(11) **EP 1 472 117 B1**
(45) Date de publication et mention de la délivrance du brevet: **16.03.2011**
(21) Numéro de dépôt: 03737294.3
(22) Date de dépôt: 30.01.2003
(51) Int. Cl.: B60S 1/24

(54) **PROCEDE DE REGLAGE DE LA COURSE ANGULAIRE D'UN MECANISME D'ESSUYAGE PAR MODIFICATION DE LA LONGUEUR D'UNE MANIVELLE, ET MANIVELLE COMPORTANT UN TRONCON DEFORMABLE**
VERFAHREN ZUR EINSTELLUNG DER WINKELFÖRMIGEN BEWEGUNG EINES WISCHERMECHANISMUS DURCH ÄNDERN DER LÄNGE EINER KURBEL UND KURBEL MIT EINEM VERFORMBAREN ABSCHNITT
METHOD FOR ADJUSTING THE ANGULAR TRAVEL OF A WIPER MECHANISM BY MODIFYING THE LENGTH OF A CRANK, AND CRANK COMPRISING A DEFORMABLE SECTION

(30) Priorité: 04.02.2002 FR 0201367
(43) Date de publication de la demande: 03.11.2004
(73) Titulaire: VALEO SYSTEMES D'ESSUYAGE, 78321 La Verrière (FR)
(72) Inventeur: BOISSAC, Jean-Paul, F-86100 Chatellerault (FR)
(86) Numéro de dépôt international: PCT/EP2003/000939
(87) Numéro de publication internationale: WO 2003/066394

(56) Documents cités:
- EP-A- 0 904 997
- DE-A- 2 647 510
- US-A- 2 894 774

## Description

L'invention propose un procédé décrit dans le préambule de la revendication 1.

On trouve par exemple de telles articulations à bielle(s) et à manivelle(s) dans des dispositifs d'entraînement dans lesquels un moteur électrique, éventuellement associé à un réducteur, entraîne en balayage alterné au moins un essuie-glace solidaire d'un arbre d'entraînement qui est monté à rotation par rapport au véhicule.

A l'aide d'un mécanisme à bielle(s) et à manivelle(s), il est par exemple possible de transformer un mouvement rotatif continu de l'arbre de sortie du moteur d'entraînement en un mouvement rotatif alterné de l'arbre d'entraînement de chaque essuie-glace.

La géométrie et la cinématique de ce mécanisme, et notamment la longueur des manivelles détermine la course angulaire de chaque essuie-glace. En modifiant cette géométrie, il est possible d'obtenir, à partir d'un même mouvement de sortie de l'arbre de sortie du moteur, deux courses angulaires différentes pour chacun des deux essuie-glace.

Il en ressort donc qu'il est particulièrement important de pouvoir bien maîtriser la géométrie du mécanisme et notamment la longueur des bielles et des manivelles qui sont articulées entre elles par des articulations à rotule, mais aussi le positionnement des différents éléments entre eux.

Or, d'un mécanisme à l'autre, il se peut que des dispersions apparaissent dans les différentes dimensions caractéristiques du mécanisme et qu'il en résulte des courses angulaires de l'essuie-glace non satisfaisantes.

Aussi, il a déjà été proposé, notamment dans les documents DE 2647510 A EP-A-0.904.997, de pouvoir faire "varier" la longueur d'une manivelle d'un tel mécanisme en réglant la position de la rotule de l'articulation à rotule sur cette manivelle.

Pour cela, la rotule est fixée au travers d'un trou oblong, formant une lumière de réglage, et sa position est déterminée par serrage au montage, la longueur au cours du temps étant ainsi liée à la fiabilité du système de serrage.

Il a aussi été proposé dans les documents US-A-5.619.886 et US-A-5.070.572 de pouvoir régler la position de la rotule par une pièce intermédiaire de réglage qui est mobile de manière réglable autour d'un axe vertical. La rotule est montée sur cette pièce intermédiaire de sorte que l'axe de la rotule soit excentré par rapport à l'axe vertical de la pièce intermédiaire. Le réglage de la position de la rotule est alors obtenu en modifiant la position angulaire de la pièce intermédiaire.

Cependant, il est apparu que les différents dispositifs proposés jusqu'à présent étaient soit trop complexes à réaliser, soit insuffisamment fiables quant à la tenue dans le temps de la position exacte de la rotule sur la manivelle dans son trou oblong.

Aussi, l'invention a pour objet de proposer un procédé de réglage simple et fiable qui permet de garantir une position précise de la rotule au cours du temps en dépit des efforts transmis et des vibrations supportées par le mécanisme au cours du temps.

Dans ce but, l'invention propose un procédé du type décrit précédemment, caractérisé en ce que
- l'étape de réglage consiste à déformer de manière permanente symétriquement par rapport à l'axe longitudinal médian du corps de la manivelle les bronches du corps de la manivelle de sorte que, lors de son fonctionnement normal, la manivelle conserve définitivement le réglage réalisé.

Selon d'autres caractéristiques de l'invention :
- l'étape de réglage consiste à réduire la longueur du tronçon du corps de la manivelle par rapprochement des extrémités articulées du corps de la manivelle suivant une direction longitudinale ;
- l'étape de réglage est effectuée après une étape de montage du mécanisme d'essuyage sur un banc de contrôle.

L'invention propose aussi une manivelle selon la revendication 4.

Selon d'autres caractéristiques de l'invention :
- ledit tronçon du corps de la manivelle comporte au moins un trou oblong d'orientation générale longitudinale qui délimite deux branches opposées longitudinales déformables ;

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique et en perspective d'un mécanisme d'essuyage conventionnel comportant un mécanisme ou tringlerie d'entraînement et de transmission de mouvement du type à bielles et à manivelles ;
- la figure 2a est une représentation schématique et à plus grande échelle d'une manivelle du mécanisme d'essuyage représenté à la figure 1, conforme à l'invention et telle qu'elle est avant le réglage de la course angulaire selon l'invention ;
- les figures 2b et 2c sont des vues similaires à celle de la figure 2a dans lesquelles la manivelle est représentée après sa déformation pour le réglage de l'angle de balayage.

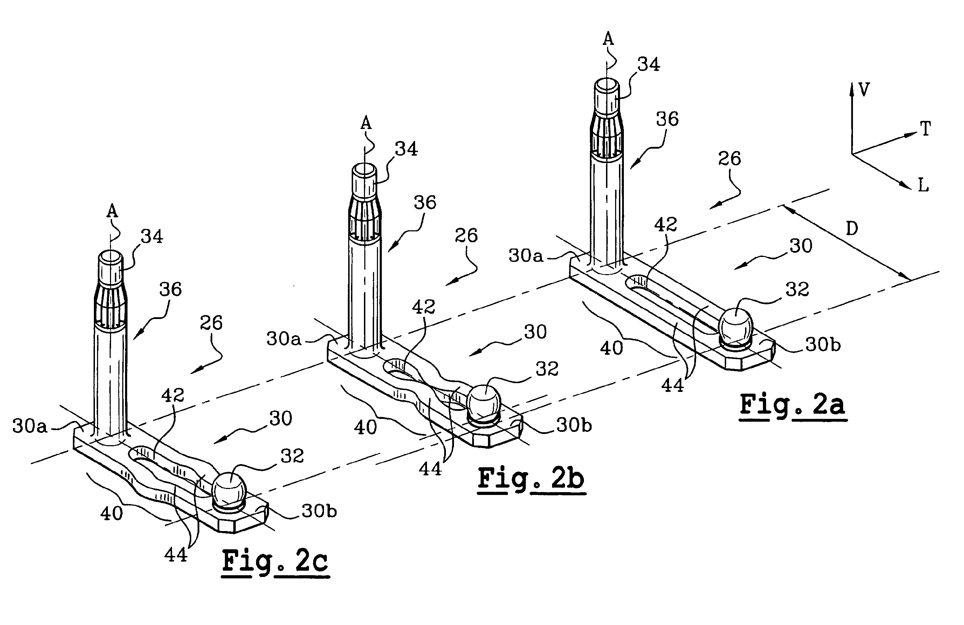

Pour la description de l'invention, on adoptera à titre non limitatif les orientations verticale, longitudinale et transversale selon le repère V, L, T indiqué à la figure 2a.

Dans la description qui va suivre, des éléments identiques, similaires ou analogues seront désignés par les mêmes chiffres de référence.

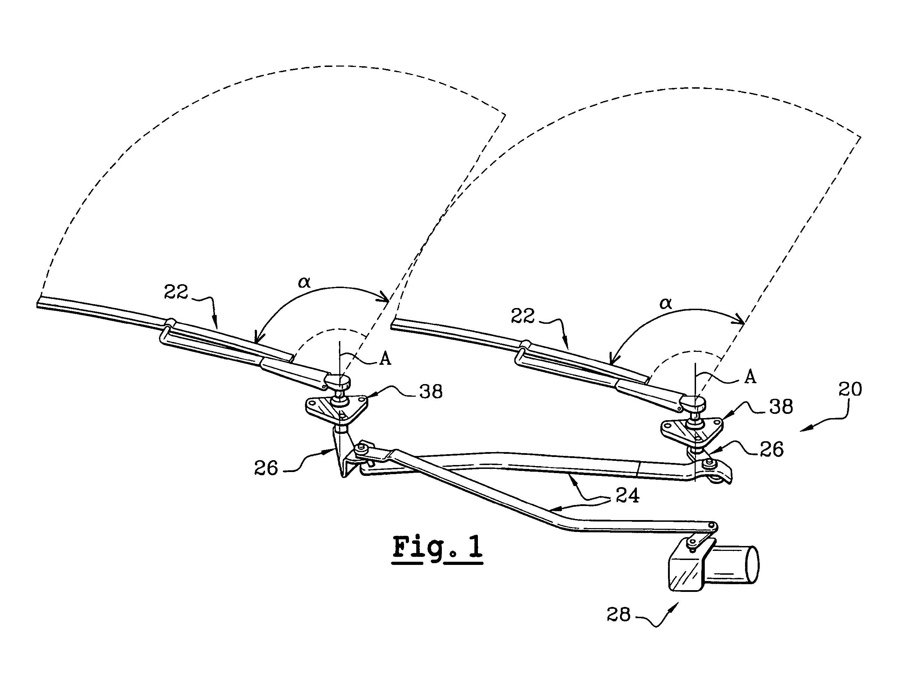

On a représenté à la figure 1 un mécanisme d'essuyage 20 conventionnel d'un pare-brise de véhicule automobile (non représenté) qui comporte deux balais d'essuyage 22. Chaque balai est mobile en rotation autour d'un axe A sensiblement vertical. Le mécanisme d'essuyage 20 comporte une tringlerie composée de bielles 24 et de manivelles 26 qui relient les balais 22 à un groupe motoréducteur 28 qui assure l'entraînement du mécanisme d'essuyage 20.

De manière connue, et comme représenté aux figures 2a à 2c, chaque manivelle 26 comporte un corps globalement plan 30 qui s'étend longitudinalement dans un plan horizontal, et qui est articulé, à une première extrémité 30a, autour de l'axe vertical de rotation du balai 22 associé.

Le corps 30 comporte, à sa deuxième extrémité libre 30b, une rotule d'articulation 32 de la manivelle 26 avec une bielle 24.

Chaque balai d'essuyage 22 est par exemple destiné à être monté à l'extrémité supérieure 34 d'un l'arbre d'entraînement 36 de manière à être entraîné dans un mouvement de balayage rotatif alterné autour de l'axe A de l'arbre 36. L'arbre 36 est guidé dans un corps de palier 38 (représenté à la figure 1) qui est destiné à être agencé à proximité de la vitre à essuyer, du côté interne d'un élément de carrosserie ou de structure de véhicule (non représenté) au travers duquel dépasse seulement l'extrémité supérieure 34 de l'arbre 36.

Pour assurer l'entraînement en rotation du balai d'essuyage 22 autour de son axe A, et comme on l'a représenté aux figures 2a, 2b et 2c, l'arbre d'entraînement 36 s'étend verticalement vers le haut depuis la première extrémité 30a du corps 30 de la manivelle 26.

Conformément aux enseignements de l'invention, et comme on l'a représenté à la figure 2a, le corps 30 de la manivelle 26 comporte au moins un tronçon 40 qui est apte à être déformé de manière permanente pour qu'il soit possible de régler la distance "D" entre les deux extrémités 30a, 30b du corps 30 de la manivelle 26, en vue de modifier la course angulaire "α" du balai 22.

Pour cela, le tronçon 40 du corps 30 comporte de préférence un trou oblong 42 central d'orientation générale longitudinale qui délimite deux branches longitudinales 44. Selon un mode de réalisation préféré de l'invention, le trou oblong 42 est positionné et dimensionné de sorte que les branches 44 soient symétriques par rapport à l'axe longitudinal médian de la manivelle 26.

Les dimensions du trou oblong 42 et du tronçon 40 sont telles que les branches longitudinales 44 puissent être déformées pour le réglage de la distance entre les deux extrémités 30a, 30b du corps 30 de la manivelle 26. Cependant, elles ne doivent pas se déformer lors du fonctionnement du mécanisme d'essuyage 20.

L'invention propose aussi un procédé de réglage de la course angulaire "α" de chaque balai 22 du mécanisme d'essuyage 20. Pour cela, le mécanisme d'essuyage 20 es d'abord monté sur un banc de contrôle qui permet notamment de déterminer les écarts entre la course angulaire "α" de chaque balai 22, et la course angulaire "α" réelle. A partir de ces valeurs, il est alors possible de régler le mécanisme d'essuyage pour avoir une course angulaire "α" optimale.

L'étape de réglage est réalisée alors que la manivelle 26 est montée sur le mécanisme d'essuyage 20, ce qui permet de supprimer des étapes de démontage puis remontage de chaque manivelle 26, et donc de réduire le temps de montage du mécanisme d'essuyage 20.

La course angulaire "α" du balai 22 dépend des dimensions des bielles 34 et des manivelles 30 de la tringlerie, ainsi que du motoréducteur 36. Cependant, seule une modification des dimensions de la manivelle 26 permet de faire varier la course angulaire "α" du balai 22 indépendamment de l'autre balai 22.

La course angulaire "α" du balai 22 dépend de la longueur de la manivelle 26, et la variation de la course angulaire "α" est inversement proportionnelle à la variation de la longueur du corps de la manivelle. Ainsi, par exemple, à une longueur de manivelle 26 importante correspond une course angulaire "α" faible et, inversement, à une longueur de manivelle 26 faible correspond une course angulaire "α" importante.

Ainsi, si la course angulaire "α" du balai 22 considéré est trop faible, cela signifie que la distance entre les extrémités 30a, 30b du corps 30 de la manivelle 26 associée est trop importante.

Pour régler la course angulaire "α" du balai 22, le procédé de réglage comporte une étape de réglage de la course angulaire "α" du balai 22 qui consiste à faire varier la longueur du tronçon longitudinal 40 du corps 30 de la manivelle 26.

Puisque le tronçon 40 est apte à être déformé du fait de la présence du trou oblong 42, le réglage de la course angulaire "α" du balai 22 consiste à déformer le tronçon 40, c'est-à-dire les branches 44. Par ailleurs, les branches 44 sont déformées de manière permanente pour que la manivelle 26 conserve ensuite définitivement le réglage pour son fonctionnement normal.

Pour augmenter la course angulaire "α" la distance entre les deux extrémités 30a, 30b est réduite. Pour cela, et comme on l'a représenté aux figures 2b et 2c, les branches 44 sont déformées symétriquement par rapport à l'axe longitudinal médian du corps 30 de la manivelle 26.

Cette déformation peut consister en un rapprochement des branches 44, comme représenté à la figure 2b, ou bien en un écartement des branches 44, comme représenté à la figure 2c. dans tous les cas, la déformation est réalisée à l'aide d'un outil adapté au mode de déformation souhaité et à la nature du corps 30 de la manivelle 26.

L'outil est par exemple en forme de pince dont chaque mors coopère avec une branche 44 de la manivelle 26 pour l'écarter ou la rapprocher de l'autre branche 44. De plus, pour éviter de créer une zone de concentration de contraintes au niveau de la déformation réalisée par les mors de l'outil, celles-ci ont de préférence une forme arrondie.

La déformation consiste à déformer les branches 44, mais pas à en modifier la longueur. Il en résulte que les extrémités 30a, 30b du corps 30 de la manivelle 26 sont globalement rapprochées longitudinalement.

La déformation du tronçon 40 peut consister, comme on l'a représenté à la figure 2b, à rapprocher au moins une partie des branches 44 de sorte qu'elles occupent une partie du volume défini par le trou oblong 42. Le corps 30 de la manivelle 26 occupe alors un volume réduit. Cependant, l'amplitude de réglage de la course angulaire "α" est limitée par le volume défini par le trou oblong 42.

La déformation du tronçon 40 peut aussi consister, comme on l'a représenté à la figure 2c, à écarter transversalement, et au moins en partie, les branches 44 qui s'étendent alors transversalement au-delà du bord longitudinal extérieur originel du corps dont l'encombrement transversal est de ce fait augmenté. Cependant, l'amplitude de réglage de la course angulaire "α" est supérieure à l'amplitude du réglage consistant à rapprocher les branches 44, et cette amplitude est limitée à la longueur du trou oblong 42.

A titre de variante de l'invention, la longueur du corps de la manivelle peut être augmentée en appliquant le procédé décrit ci-dessus. Pour cela, à son état initial, c'est-à-dire avant sa déformation, la manivelle 26 se présente sous la forme représentée à la figure 2c dans laquelle les branches 44 sont écartées en partie.

Ainsi, pour augmenter la longueur du corps 30 de la manivelle 26, et donc pour réduire la course angulaire "α" du balai 22, les branches 44 sont redressées en fonction de la modification à obtenir. La longueur maximale du corps 30 est obtenue lorsque les branches sont rectilignes, comme on l'a représenté à la figure 2a.

Lorsque la manivelle 26 est dans son état initial, les branches 44 ne sont pas écartées au maximum de sorte qu'il soit possible de les écarter davantage pour pouvoir réduire la longueur du corps 30 de la manivelle 26.

A titre de variante non représentée, la déformation des branches 44 peut consister en une courbure identique des deux branches 44, qui s'étendent alors parallèlement l'une par rapport à l'autre.

Un avantage venant du fait que l'on rapproche longitudinalement les deux extrémités 30a, 30b du corps 30 de la manivelle 26 est que la modification de la course angulaire "α" est symétrique par rapport à sa bissectrice. Ainsi, le réglage de la position angulaire du bras 22 par rapport à l'arbre d'entraînement 26 est indépendante du réglage de la course angulaire "α" chacune de ces étapes de réglage pouvant ainsi être réalisée sans modifier le réglage obtenu lors de l'autre étape.

Un tel procédé de réglage permet d'avoir un réglage immédiat de la course angulaire "α" de chaque balai 22, sans avoir à démonter puis à remonter un élément quelconque du mécanisme d'essuyage 20. Ceci permet de supprimer d'éventuels écarts de réglage dus à un mouvement relatif de deux pièces lors du remontage.

## Revendications

1. Procédé de réglage de la course angulaires d'un mécanisme d'essuyage (20) de véhicule automobile,
comportant une bielle (24) et une manivelle (26), dans lequel la manivelle (26) comporte un corps (30) comprenant des branches (44) qui s'étend longitudinalement dans une plan sensiblement horizontal, qui est articulé à une première extrémité (30a) autour d'un axe (A) vertical, et qui est articulé à une seconde extrémité (30b) à la bielle (24),
comportant une étape de réglage de la course angulaire (α) en modifiant la distance entre la première et la deuxième extrémité (30a, 30b) articulées de la manivelle (26),
l'étape de réglage consistant à modifier la longueur d'un tronçon (40) longitudinal du corps (30) de la manivelle (26),
**caractérisé en ce que**
l'étape de réglage consiste à déformer de manière permanente symétriquement par rapport à l'axe longitudinal médian du corps (30) de la manivelle (26) les branches (44) du corps (30) de la manivelle (26) de sorte que, lors de son fonctionnement normal, la manivelle (26) conserve définitivement le réglage réalisé.

2. Procédé selon la revendication précédente, **caractérisés en ce que** l'étape de réglage consiste à réduire la longueur du tronçon (40) du corps (30) de la manivelle (26) par rapprochement des extrémités articulées (30a, 30b) du corps (30) de la manivelle (26) suivant une direction longitudinale.

3. Procédé selon l'une quelconque des revendications précédentes, **caractérisé en ce que** l'étape de réglage est effectuée après une étape de montage du mécanisme d'essuyage (20) sur un banc de contrôle.

4. Manivelle (26) appartenant à une tringlerie de transmission de mouvement d'un mécanisme d'essuyage (20) de véhicule automobile, comportant un corps (30) qui s'étend longitudinalement dans un plan horizontal, et qui comporte une première extrémité longitudinale (30a) articulée à une bielle (24) de la tringlerie, et une seconde extrémité longitudinale (30b) qui est reliée à un bras d'essuyage (22) et qui est articulée autour d'un axe vertical (A), du type dans lequel la distance entre les deux extrémités articulées (30a, 30b) de la manivelle (26) est réglable,
**caractérisée en ce que** le corps (30) de la manivelle (26) comporte au moins un tronçon (40) comportant des branches (44) qui sont déformées symétriquement par rapport à l'axe longitudinal médian du corps (30) de la manivelle (26) pour modifier et régler la distance entre les deux extrémités articulées (30a, 30b) de la manivelle (26), et
**en ce que** la déformation est permanente.

5. Manivelle (26) selon la revendication 4, **caractérisée en ce que** ledit tronçon (40) du corps (30) de la manivelle (26) comporte au moins un trou oblong (42) d'orientation générale longitudinale qui délimite deux branches opposées longitudinales (44) déformables.

6. Manivelle (26) selon la revendication précédente, **caractérisée en ce que** les branches (44) de la manivelle (26) sont globalement symétriques par rapport à un axe longitudinal médian de la manivelle (26).

## Claims

1. A method for adjusting the angular travel of a wiper mechanism (20) in a motor vehicle,
including a link (24) and a lever (26), wherein the lever (26) includes a body (30) including branches (44), which extends longitudinally in a substantially horizontal plane, which is hinged at a first end (30a) about a vertical axis (A), and which is hinged at a second end (30b) with the link (24),
including a step of adjusting the angular travel (α) by modifying the distance between the first and the second hinged ends (30a, 30b) of the lever (26),
the step of adjustment consisting in changing the length of a longitudinal segment (40) of the body (30) of the lever (26),
**characterized in that**
the step of adjustment consists in permanently deforming symmetrically with respect to the middle longitudinal axis of the body (30) of the lever (26), the branches (44) of the body (30) of the lever (26) so that, in normal operation, the lever (26) definitely keeps the performed adjustment.

2. A method according to the preceding claim, **characterised in that** the step of adjustment consists in reducing the length of the segment (40) of the body (30) of the lever (26) by bringing nearer the hinged ends (30a, 30b) of the body (30) of the lever (26) in a longitudinal direction.

3. A method according to any one of the preceding claims, **characterized in that** the step of adjustment is executed after a step of mounting the wiper mechanism (20) on a test bench.

4. A lever (26) belonging to a linkage for transmitting a movement to a wiping mechanism (20) in a motor vehicle, including a body (30) which extends longitudinally in a horizontal plane, and which includes a first longitudinal end (30a) hinged with a link (24) of the linkage, and a second longitudinal end (30b) which is connected to a wiper arm (22) and which is hinged about a vertical axis (A), of the type wherein the distance between the two hinged ends (30a, 30b) of the lever (26) can be adjusted.,
**characterized in that** the body (30) of the lever (26) includes at least one segment (40) including branches (44) which are symmetrically deformed with respect to the middle longitudinal axis of the body (30) of the lever (26) for changing and adjusting the distance between the two hinged ends (30a, 30b) of the lever (26), and
**in that** the deformation is permanent.

5. A lever (26) according to claim 4, **characterized in that** said segment (40) of the body (30) of the lever (26) includes at least one oblong hole (42) having a generally longitudinal orientation which defines two deformable longitudinal opposite branches (44).

6. A lever (26) according to the preceding claim, **characterised in that** the branches (44) of the lever (26) are globally symmetrical with respect to a middle longitudinal axis of the lever (26).

## Patentansprüche

1. Verfahren für die Reglung des Winkelhubs eines Wischermechanismus (20) im Kraftfahrzeug,
der eine Stange (24) und einen Hebel (26) umfasst, in dem der Hebel (26) einen Körper (30) mit Zweigen (44) umfasst, der sich längs in einer deutlich horizontalen Ebene erstreckt, der an einem ersten Ende (30a) um eine senkrechte Achse (A) angelenkt ist, und der an einem zweiten Ende (30b) an der Stange (24) angelenkt ist,
das einen Schritt mit Regelung des Winkelhubs (α) durch Veränderung des Abstands zwischen dem ersten und dem zweiten angelenkten Ende (30a, 30b) des Hebels (26) umfasst,
wobei der Schritt der Regelung darin besteht, die Länge eines Längsabschnitts (40) des Körpers (30) des Hebels (26) zu verändern,
**dadurch gekennzeichnet, dass**
der Schritt der Regelung darin besteht, die Zweige (44) des Körpers (30) des Hebels (26) symmetrisch gegenüber der medianen Längsachse des Körpers (30) des Hebels (26) auf Dauer zu verformen, sodass der Hebel (26) bei seinem normalen Betrieb die durchgeführte Regelung endgültig beibehält.

2. Verfahren nach vorstehendem Anspruch, **dadurch gekennzeichnet, dass** der Schritt der Regelung darin besteht, die Länge des Abschnitts (40) des Körpers (30) des Hebels (26) durch Annäherung der angelenkten Enden (30a, 30b) des Körpers (30) des Hebels (26) in einer Längsrichtung zu verringern.

3. Verfahren nach einem beliebigen der vorstehenden Ansprüche, **dadurch gekennzeichnet, dass** der Schritt der Regelung nach einem Schritt mit Montage des Wischermechanismus (20) auf einem Prüfstand erfolgt.

4. Hebel (26), der zu einem Gestänge für die Übertragung der Bewegung eines Wischermechanismus (20) im Kraftfahrzeug gehört, der einen Körper (30) umfasst, der sich längs in einer horizontalen Ebene erstreckt, und der ein erstes Längsende (30a) umfasst, das an eine Stange (24) des Gestänges angelenkt ist, und ein zweites Längsende (30b), das mit einem Wischarm (22) verbunden ist, und das um eine senkrechte Achse (A) angelenkt ist, von der Art, bei der der Abstand zwischen den beiden angelenkten Enden (30a, 30b) des Hebels (26) regelbar ist,
**dadurch gekennzeichnet, dass** der Körper (30) des Hebels (26) zumindest einen Abschnitt (40) umfasst, der Zweige (44) umfasst, die symmetrisch gegenüber der medianen Längsachse des Körpers (30) des Hebels (26) auf Dauer verformt sind, um den Abstand zwischen den beiden angelenkten Enden (30a, 30b) des Hebels zu verändern und zu regeln, und
**dadurch**, dass die Verformung permanent ist.

5. Hebel (26) nach Anspruch 4, **dadurch gekennzeichnet, dass** der besagte Abschnitt (40) des Körpers (30) des Hebels (26) zumindest ein längliches Loch (42) mit allgemeiner Längsausrichtung umfasst, das zwei entgegengesetzte verformbare Längszweige (44) abgrenzt.

6. Hebel (26) nach vorstehendem Anspruch 4, **dadurch gekennzeichnet, dass** die Zweige (44) des Hebels (26) insgesamt symmetrisch gegenüber einer medianen Längsachse des Hebels (26) sind.
